Europäisches Patentamt

European Patent Office

Office européen des brevets

(19)

(11) EP 0 558 887 B1

(12) EUROPÄISCHE PATENTSCHRIFT

(45) Veröffentlichungstag und Bekanntmachung des Hinweises auf die Patenterteilung:
02.12.1998 Patentblatt 1998/49

(51) Int. Cl.$^6$: **C01B 21/097**, C01B 21/06, C01B 21/082

(21) Anmeldenummer: 93100201.8

(22) Anmeldetag: 08.01.1993

(54) **Anorganische mikroporöse Festkörper sowie Verfahren zu ihrer Herstellung**

Inorganic microporous particles and process for their preparation

Corps formés inorganiques microporeux et leur procédé de préparation

(84) Benannte Vertragsstaaten:
**DE FR GB IT**

(30) Priorität: **21.01.1992 DE 4201484**

(43) Veröffentlichungstag der Anmeldung:
**08.09.1993 Patentblatt 1993/36**

(73) Patentinhaber: **BAYER AG**
**51368 Leverkusen (DE)**

(72) Erfinder:
• **Schnick, Wolfgang, Dr.**
**W-5300 Bonn (DE)**
• **Lücke, Jan, Dipl.-Chem.**
**W-5300 Bonn (DE)**

(56) Entgegenhaltungen:
**EP-A- 560 005**

• **STRUCTURAL INORGANIC CHEMISTRY by A.F. Wells, 5th ed.,Oxford: Clarendon, 1984**
• **Technische Keramische Werkstoffe von J. Kriegesmann, Deutscher Wirtschafts dienst, K ln, 1989**
• **MATERIALS RESEARCH BULLETIN Bd. 17, 1982, Seiten 399 - 403 R. MARCHAND ET AL. 'Mise en évidence de tétraèdres PN4 dans le nitrure Mg2PN3 de type w rtzite.'**
• **ZEITSCHRIFT F R ANORGANISCHE UND ALLGEMEINE CHEMIE. Bd. 588, 1990, Seiten 19 - 25 W. SCHNICK ET AL. 'Zur Kenntnis von Lithium-phosphor(IV)-nitrid Reindarstellung und Verfeinerung der Kristallstruktur von LiPN2.'**
• **CHEMICAL ABSTRACTS, vol. 91, no. 22, November 1979, Columbus, Ohio, US; abstract no. 185842w, V. KOLSKY ET AL. 'Study of the mechanism of diaminotetrachlorocyclotriphosphazene synthesis.' Seite 717 ;**
• **ANGEWANDTE CHEMIE INTERNATIONAL, ENG. ED Bd. 31, Nr. 2, Februar 1992, Seiten 213 - 215 W. SCHNICK ET AL. 'Zn7(P12N24)Cl2- A Sodalite with a Phosphorus-Nitrogen Framework.'**
• **Atlas of zeolite structure types, by W.M.Meier and D.H.Olson, second edition (1987) Butterworths, pages 1-11, 62, 63, 128, 129**

**Beschreibung**

Die vorliegende Erfindung betrifft neue anorganische mikroporöse Festkörper mit einer Gerüststruktur aus über ihre Ecken verknüpften $PX_4$-Tetraedern sowie Verfahren zur Herstellung dieser Festkörper.

Kristalline Alumosilicate vom Zeolith-Typ sind seit langem bekannt und gut charakterisiert (J.V. Smith; Chem. Rev. 88 (1988) 149). Unter dem Oberbegriff "Molekularsiebe" sind heute über 64 Strukturtypen mit weit über 1.000 Varianten - natürlichen wie synthetischen Ursprungs - bekannt (W.M. Meier, D.H. Olson: "Atlas of Zeolite Structure Types"; Second Edition, Butterworth, London (1987)). Gemeinsames Bauelement dieser Oxo-Verbindungen sind dreidimensional über alle Ecken (Sauerstoffatome) verknüpfte $PO_4$-Tetraeder ( P = Si, Al), Charakteristisches Merkmal sind Poren definierter, variabler Größe, welche diesen Verbindungen Ionenaustausch-und reversible Adsorptionseigenschaften verleihen, ohne daß es zu Veränderungen im gerüstbildenden Netzwerk kommt. Diese mikroporösen Festkörper haben vielschichtige Anwendungen gefunden (F. Schwochow, L. Puppe; Angew. Chem. 87 (1975) 659).

Sie werden zur Adsorption von Gasen (Reinigung von Gasgemischen) und Flüssigkeiten (Molekularsieb) benutzt (B.E. Ullmann, E. Biekert "Ullmanns Encyclopädie der Technischen Chemie", Bd. 17, 4. Auflage, Verlag Chemie, Weinheim (1972) S. 9). Weiter dienen sie als Katalysatoren bei verschiedenen Reaktionen (Hydrierung/Dehydrierung, Krakken von Rohbenzin, Isomerisierung von Alkanen) sowie zur Trennung von Gemischen (Chromatographie, Ionenaustauscher) (W. Hölderich, M. Hesse, F. Näumann; Angew. Chem. 100 (1988) 232). Neuere Anwendungen, die zum Teil noch in der Entwicklung stehen, beruhen auf ihrer Eigenschaft als Ionenleiter (Festkörperelektrolyte) sowie als Trägermaterial für Enzyme und Mikroorganismen (Biotechnologie) (G.A. Ozin, A. Kuperman, A. Stein; Angew. Chem. 101 (1989) 373).

Allen beschriebenen Verbindungen ist gemeinsam, daß Sauerstoff den elektronegativen Teil der Gerüststruktur bildet. Eine Reihe von Verbindungen wurde synthetisiert, in denen Silicium beziehungsweise Aluminium ganz oder teilweise durch andere elektropositive Elemente (B, P, Fe, Cr, Sb, As, Ga, Ge, Ti, Zr, Hf) (J.V. Smith; Chem. Rev. 88 (1988) 149) ersetzt wurden; hierdurch konnten Verbindungen mit modifizierten Eigenschaften erhalten werden (W. Hölderich, M. Hesse, F. Näumann; Angew. Chem. 100 (1988) 232).

Insbesondere hinsichtlich ihrer Festigkeit und chemischen Beständigkeit erfüllen die beschriebenen Systeme nicht immer die erwünschten Anforderungen.

Aus A.F. Wells, Structural Inorganic Chemistry, 5th ed., 1984, Clarendon (Oxford, GB), Seiten 86-90, 832-837 und 161-167 sind Nitride wie z.B. $Si_3N_4$, AlN oder $Be_3N_2$ mit ihren jeweiligen Strukturen bekannt geworden. Verbindungen, die denen der vorliegenden Erfindung entsprechen, sind aus dieser Publikation jedoch nicht bekannt geworden. Gleiches gilt für die Publikation Technische Keramische Werkstoffe, Teil 1, Kapitel 4.3.1.0, Seite 2-4, in dem Siliciumnitridkeramiken sowie deren Strukturen beschrieben werden. Aus Mat. Res. Bull., Teil 17, 1982, Seite 399-403 von R. Marchand et al. ist die Verbindung $Mg_2PN_3$ vom Wurtzittyp bekannt und Z. anorg. allg. Chemie, Teil 588, 1990, Seite 19-25 von W. Schnick et al. beschreibt die Verbindung $LiPN_2$, die ein dreidimensionales Netzwerk von eckenverknüpften $PN_4$-Tetraedern aufweist. Auch diese zuvor genannten Verbindungen unterscheiden sich maßgeblich von den anorganischen Festkörpern gemäß der vorliegenden Erfindung.

Aufgabe dieser Erfindung ist die Bereitstellung von Verbindungen, die diese Nachteile nicht aufweisen. Es wurde nun gefunden, daß diese Anforderungen erfüllt werden durch mikroporöse Gerästrukturen, die aus eckenverknüpften $PN_4$-Tetraedern (P = tetraedrisch umgebenes Zentralatom) aufgebaut sind.

Gegenstand dieser Erfindung sind somit anorganische mikroporöse Festkörper mit einer Gerüststruktur aus über ihre Ecken verknüpften $PN_4$-Tetraedern und mit einer in Anspruch 1 gegebenen Zusammensetzung.

Diese erfindungsgemäßen stickstoffhaltigen, zeolithähnlichen Verbindungen beinhalten ein großes Potential an vorteilhaften Anwendungsmöglichkeiten.

So kann Stickstoff im Gegensatz zu Sauerstoff drei Bindungen zu Nachbaratomen eingehen; außerdem weist Stickstoff im Vergleich eine geringere Elektronegativität auf. Ein Ersatz von Sauerstoff durch Stickstoff in Zeolithen könnte insbesondere für katalytische Anwendungen eine bedeutsame Modifizierung der Basizität dieser Verbindungen bewirken, so daß der Aufbau von Gerüststrukturen aus $PN_4$-Tetraedern zu einer größeren strukturellen Flexibilität führt und die Synthese neuer mikroporöser Festkörper mit modifizierten oder auch gänzlich neuen Eigenschaften ermöglicht. Durch Variation der Porengröße kann das Adsorptionsverhalten von Gasen und Flüssigkeiten auf neue Weise verändert werden. Beide Eigenschaften sind derzeit von großem wissenschaftlichen wie wirtschaftlichen Interesse.

Besonders gute Ergebnisse werden mit anorganischen Festkörpern erzielt, die die allgemeine Zusammensetzung $M_xH_y[P_{12}N_{24}]Z_z$ aufweisen, wobei

$0 < x \leq 8$,

$y = 0 - 14$,

$z = 0 - 2$,

M = ein oder mehrere Metalle aus der Gruppe Mg, Ca, Sr, Ba, Cr, Mn, Fe, Co, Ni, Zn, Cu, Yb, Eu, Pr und Nd,

Z = Cl und/oder Br,

aufweist, wobei für die Gesamtzusammensetzung Elektoneutralität gewährleistet ist und die Porengröße der mikroporösen Festkörper zwischen 0,2 und 5 nm beträgt. Bevorzugt entspricht dabei die Raumnetzstruktur der $PX_4$-Tetraeder einem Zeolith-Strukturtyp.

Diese Erfindung beinhaltet auch Verbindungen, in denen M teilweise durch ein weiteres Metall M' ersetzt ist, was zu folgender empirischer Summenformel führt: $M_x M_r' H_y [P_{12} N_{24}] Z_z$, wobei M' ein weiteres Metall aus der Gruppe Mg, Ca, Sr, Ba, Cr, Mn Fe, Co, Ni, Zn, Cu, Yb, Eu, Pr und Nd ist und r zwischen 0 und 8 liegt. Für den Einbau weiterer Metalle M' sind folgende Voraussetzungen zu erfüllen: Es muß nach dem Austausch ein elektroneutraler Festkörper vorliegen, das heißt, es muß Ladungsausgleich herrschen. Des weiteren muß das Metall M' einen passenden Ionenradius besitzen, um das ursprünglich vorhandene Metall M zu ersetzen. Dieses bedeutet aufgrund der jeweils durch das Gerüst vorgegebenen Größe des Kationenplatzes, daß der Ionenradius nicht mehr als ± 20 % differieren sollte. Außerdem muß eine entsprechende redoxstabile Ausgangsverbindung für die Herstellung verfügbar sein

Die erfindungsgemäßen Verbindungen sind nitridische Festkörper mit dreidimensionaler Gerüststruktur (isoster zu den Oxo-Zeolithen) und definierter Porengröße. Sie zeigen charakteristische Adsorptionseigenschaften und Ionenaustauschreaktionen. Aufgrund ihrer hohen Stabilität gegenüber thermischer Belastung und chemischen Einflüssen sind die erfindungsgemäßen Verbindungen für die Verwendung als Katalysatoren bzw. als Katalysator-Hilfsstoffe geeignet. Aufgrund ihrer intensiven Farbigkeit sind sie als Pigmente, z.B. zur Einfärbung von Kunststoff, geeignet. Hierbei wären M und M' Übergangsmetalle wie z.B. Cr, Mn, Fe, Co, Ni, Cu, Pr, Eu, Yb, Nd. Zusätzlich bietet sich ihr Einsatz als Flammschutzmittel an. Des weiteren sind sie als Festkörperelektrolyt verwendbar.

Die Herstellung der erfindungsgemäßen Verbindungen ist nach verschiedenen Verfahren möglich.

Gegenstand dieser Erfindung ist auch ein Verfahren zur Herstellung eines anorganischen Festkörpers der oben definierten allgemeinen Zusammensetzung, wobei für die Gesamtzusammensetzung Elektroneutralität gewährleistet ist, welches dadurch gekennzeichnet ist, daß eine P-N-haltige bzw. bildende Verbindung, die gegebenenfalls Z enthalten kann, in der das Verhältnis von P zu N zwischen 1 und 1 zu 2 beträgt, mit einer Metallhalogenidverbindung $MZ_n$, wobei n der Wertigkeit des Metalls M entspricht, umgesetzt wird, wobei im Falle eines P zu N-Verhältnisses von größer als 1 zu 2 zur Erreichung dieses Verhältnisses die Reaktion in Gegenwart von $NH_3$ und/oder $NH_4Z$ durchgeführt wird.

Die Phosphor und Stickstoff enthaltenden Verbindungen können entweder direkt eingesetzt werden oder aber sich in situ in der Reaktionsmischung bilden.

Als Stickstoff liefernde Komponente werden bevorzugt Ammoniumchlorid oder Ammoniak eingesetzt. Diese können in reiner Form oder chemisch gebunden (z.B. in Form von Metallamin-Komplexen, Amiden oder Nitriden) eingesetzt werden.

Als P-N-haltige bzw. -bildende Substanz werden bevorzugt P, $PZ_5$, $PNZ_2$, $P_3N_5$ und/oder $HPN_2$ eingesetzt. Als Phosphor enthaltende Ausgangsverbindung eignen sich insbesondere alle bei der Ammonolyse von $PCl_5$ entstehenden Verbindungen sowie deren Kondensationsprodukte (vergleiche A. Schmidtpeter, C. Weingand, E. Hafner-Roll; Z. Naturforsch. 24 b (1969) 799). Durch Substitution von Cl durch $NH_2$ in Phosphor(V)-chlorid gefolgt von Kondensationsreaktionen entsteht eine Vielzahl denkbarer Verbindungen, so zum Beispiel

$$PCl_5 + 4\,NH_3 \rightarrow P(NH_2)_4Cl + 4\,HCl \text{ (Substitution)}$$

$$2\,PCl_4NH_2 \rightarrow [Cl_3P\text{-}N\text{=}PCl_3]^+Cl^- + NH_4Cl \text{ (Kondensation)}.$$

Für eine praktische Anwendung dieser Verbindungen als Ausgangssubstanzen (Phosphorkomponente) für die Synthese der erfindungsgemäßen mikroporösen Festkörper sind zur Gewährleistung definierter stöchiometrischer Verhältnisse vor allem solche Verbindungen besonders geeignet, die bei der Ammonolyse und nachfolgender Kondensation von $PCl_5$ in reiner und definierter Form erhalten werden können. Prinzipiell können jedoch auch alle anderen Ammonolyseprodukte von $PCl_5$ mit Erfolg eingesetzt werden. Besonders bevorzugt sind $HPN_2$ und/oder $PNCl_2$. Als besonders geeignete Herstellungsmethode für die erfindungsgemäßen mikroporösen Festkörper wurde die heterogene Ammonolyse von $P_3N_5$ mit gasförmigem Ammoniak entwickelt. Hierbei wird das benötigte $NH_3$ durch Umsetzung eines Metallnitrides (z.B. $Zn_3N_2$) mit $NH_4Cl$ gemäß folgender Gleichung gewonnen:

$$\text{z.B. } Zn_3N_2 + 6\,NH_4Cl \rightarrow 3\,ZnCl_2 + 8\,NH_3$$

Der erfindungsgemäße mikroporöse Festkörper entsteht, wenn das hierbei gebildete Metallhalogenid als flüchtige Komponente über die Gasphase oder aufgrund direkter Vermischung mit dem bei der Synthese eingesetzten $P_3N_5$ reagiert.

$$4\,P_3N_5 + 4\,NH_3 + 7\,ZnCl_2 \rightarrow Zn_7[P_{12}N_{24}]Cl_2 + 12\,HCl$$

Anstelle des hier exemplarisch angeführten Zinknitrids beziehungsweise Zinkchlorids können auch beliebige andere Nitride beziehungsweise Chloride sowie Bromide anderer Metalle eingesetzt werden. Die Herstellung der erfindungsgemäßen mikroporösen Festkörper gelingt in analoger Weise bei Verwendung der polymer aufgebauten Phosphorkomponente Phosphor(V)-nitrid-imid ($HPN_2$) nach folgendem Reaktionsschema:

$$7\, MZ_2 + 12\, HPN_2 \rightarrow M_7[P_{12}N_{24}]Z_2 + 12\, HZ$$

M = Mg, Ca, Sr, Ba, Cr, Mn, Fe, Co, Ni, Cu, Zn, Yb, Nd, Eu, Pr,
Z = Cl, Br.

Die erfindungsgemäßen mikroporösen Festkörper können aber auch unter Verwendung molekularer Phosphorkomponenten, von denen sich Hexachlor-cyclotriphosphazen $((PNCl_2)_3)$ besonders bewährt hat, synthetisiert werden. Hierzu wird $(PHCl_2)_3$ gemäß folgender Gleichung mit Metallhalogenid und $NH_3$ beziehungsweise $NH_4Cl$ umgesetzt:

$$7\, MZ_2 + 4\, (PNZ_2)_3 + 12\, NH_3 \rightarrow M_7[P_{12}N_{24}]Z_2 + 36\, HZ$$

M = Mg, Ca, Sr, Ba, Cr, Mn, Fe, Co, Ni, Cu, Zn, Yb, Nd, Eu, Pr,
Z = Cl, Br.

Die auf diese Weise hergestellten Festkörper können bei Unterschuß an Metallhalogenid noch Wasserstoff enthalten (z.B. gemäß einer Zusammensetzung $M_{7-x}H_{2x}[P_{12}N_{24}]Cl_2$). Umsetzung dieser wasserstoffhaltigen Produkte mit überschüssigem Metallhalogenid führen zum zunehmenden Ersatz von H gegen M gemäß folgender Gleichung, wie z.B.

$$M_{7-x}H_{2x}[P_{12}N_{24}]Z_2 + x \cdot MCl_2 \rightarrow M_7[P_{12}N_{24}]Cl_2 + 2x\, HCl$$

Die oben genannten Reaktionen werden bei Temperaturen von Raumtemperatur bis 850°C durchgeführt. Für die hier näher beschriebenen Festkörper- beziehungsweise Gasphasenreaktionen sind insbesondere Temperaturen im Bereich 400 bis 850°C geeignet.

Die Umsetzungen von Phosphorkomponenten mit Metallhalogeniden und Ammoniak beziehungsweise $NH_4Cl$ zu den erfindungsgemäßen mikroporösen Festkörpern können auch in Lösung unter Verwendung geeigneter Lösemittel (z.B. $CCl_4$, $Cl_2HCCHCl_2$, THF, Diglyme, fl. $NH_3$) durchgeführt werden. Diese Umsetzungen werden bevorzugt in geschlossenen Reaktionsapparaturen im Temperaturbereich von 25 bis 600°C, gegebenenfalls unter Verwendung von Templaten (z.B. ternäre Amine, quaternäre Ammoniumsalze) durchgeführt.

Die erfindungsgemäßen mikroporösen Festkörper fallen zumeist phasenrein an. Eventuelle Verunreinigungen durch überschüssiges Metallhalogenid oder $NH_4Cl$ können im Vakuum durch Sublimation entfernt werden.

Um die Bildung von Oxo-Verbindungen zu vermeiden, sollten alle Operationen (Herstellung, Handhabung und Charakterisierung der Edukte und Produkte) bevorzugt unter strengem Sauerstoff- und Wasserausschluß durchgeführt werden.

Die in dieser Erfindung beschriebenen neuartigen mikroporösen Festkörper fallen bei der Synthese als mikrokristalline Festkörper an, die in allen gängigen Lösemitteln, Säuren und Basen unter Normalbedingungen unlöslich sind.

Im folgendem wird die Erfindung beispielhaft erläutert, ohne daß darin eine Einschränkung zu sehen ist.

### Beispiel 1

2 mmol $P_3N_5$ (326 mg) werden mit einer Mischung aus 0,25 mmol $Zn_3N_2$ (56 mg) und 1,5 mmol $NH_4Cl$ (80 mg) in eine zylindrische Quarzglasampulle überführt; diese wird evakuiert und durch Zuschmelzen gasdicht verschlossen, Die Ampulle wird in einen Röhrenofen gestellt und 7 Tage bei 600°C erhitzt, Man erhält ein farbloses, mikrokristallines Pulver. Nach naßchemischer und EDX-Analyse ergibt sich folgende Zusammensetzung für den Festkörper: $Zn_{4.3}H_{5.4}P_{12}N_{24}Cl_2$. Im Infrarot-Spektrum erscheinen drei Absortionsbanden (3110, 1080 und 560 $cm^{-1}$). Im Pulver-Röntgenbeugungsdiagramm ($CuK_{\alpha 1}$-Strahlung) werden die stärksten Reflexe bei folgenden $2\theta$-Werten beobachtet (relative Intensität in Prozent): 15,21 (15 %), 26,49 (100 %), 34,47 (14 %), 37,98 (19 %), 41,04 (26 %) und 46,94 (24 %).

### Beispiel 2

1,4 mmol Nickel(II)-chlorid $NiCl_2$ (181,4 mg), 0,4 mmol Hexachlorcyclotriphosphazen $(PNCl_2)_3$ (139,1 mg) und 1,2 mmol Ammoniumchlorid $NH_4Cl$ (64,2 mg) werden homogenisiert und wie in Beispiel 1 in eine Ampulle abgefüllt und in einen Röhrenofen überführt, Die Reaktionstemperatur beträgt zunächst 500°C (1 Tag), danach 750°C (3 Tage). Das Produkt ist von tiefblauer Farbe und besitzt Absorptionsmaxima bei 229, 600 und 1050 mm im UV-VIS-Spektrum. Die Analyse ergibt folgende Zusammensetzung: $Ni_{4,0}H_6P_{12}N_{24}Cl_2$. Im Infrarotspektrum erscheinen zwei Banden (1075 und 565 cm$^{-1}$), Im Pulver-Röntgenbeugungsdiagramm ($CuK_{\alpha 1}$-Strahlung) werden die stärksten Reflexe bei folgenden 2θ-Werten erhalten (relative Intensität in Prozent): 15,29 (20 %), 26,67 (100 %), 34,66 (15 %), 38,08 (25 %), 41,27 (29 %) und 47,13 (20 %).

Beispiel 3

2,4 mmol Phosphornitrid-imid $HPN_2$ (144,0 mg) und 1,4 mmol Zink(II)-bromid $ZnBr_2$ (315,3 mg) werden homogenisiert und wie in Beispiel 1 in eine Ampulle abgefüllt und in einen Röhrenofen überführt. Die Reaktionstemperatur beträgt 470°C (2 Tage) und 800°C (2,5 Tage). Man erhält ein farbloses, mikrokristallines Produkt der Zusammensetzung $Zn_{3,7}H_{6,6}P_{12}N_{24}Br_2$. Im Infrarotspektrum treten drei Banden bei 3155, 1084 und 565 cm$^{-1}$ auf. Im Pulver-Röntgenbeugungsdiagramm ($CuK_{\alpha 1}$-Strahlung) werden die stärksten Reflexe bei folgenden 2θ-Werten erhalten: 21,51 (6 %), 26,51 (100 %), 30,74 (5 %), 37,91 (9 %) und 41,05 (35 %).

Beispiel 4

0,14 mmol $Zn_4H_6[P_{12}N_{24}]Cl_2$ (100 mg) und 0,6 mmol Zinkchlorid $ZnCl_2$ (81,8 mg) werden wie in Beispiel 1 in eine Ampulle abgefüllt, in einen Röhrenofen überführt und in Argonatmosphäre (1 bar) auf 700°C (6 Tage) erwärmt, Unter Abgabe von Chlorwasserstoff bildet sich ein wasserstofffreies Produkt; überschüssiges Zinkchlorid wird im Hochvakuum absublimiert. Man erhält ein farbloses, mikrokristallines Produkt der Zusammensetzung $Zn_7[P_{12}N_{24}]Cl_2$. Im Infrarotspektrum erkennt man zwei Absorptionsbanden bei 1080 und 570 cm$^{-1}$. Im Pulver-Röntgenbeugungsdiagramm ($CuK_{\alpha 1}$-Strahlung) werden die stärksten Reflexe bei folgenden 2θ-Werten erhalten: 15,19 (7 %), 26,47 (100 %), 34,38 (15 %), 37,78 (19 %), 40,94 (32 %) und 46,72 (47 %).

Beispiel 5

6 mmol Phosphornitrid-imid $HPN_2$ (360 mg) und 3,5 mmol Zink(II)-chlorid $ZnCl_2$ (477 mg) werden homogenisiert und in ein Korundgefäß überführt und in ein Reaktionsrohr aus Quarzglas gestellt. Zunächst wird in einem Röhrenofen 3 Tage bei 700°C in Ammoniak-Atmosphäre (1 bar), danach 3 Tage bei 800°C in Stickstoff-Atmosphäre (1 bar) erhitzt. Man erhält ein farbloses, mikrokristallines Produkt der Zusammensetzung $Zn_6[P_{12}N_{24}]$. Im Infrarotspektrum treten zwei Banden bei 1070 und 520 cm$^{-1}$. Der stärkste Reflex im Röntgenbeugungsdiagremm liegt bei 2θ = 26,4 (100 %).

Beispiel 6

0,5 mmol Hexammincobalt(II)-chlorid $Co(NH_3)_6Cl_2$ (116 mg) und 1 mmol Hexachlorcyclotriphosphazen $(PNCl_2)_3$ (116 mg) werden wie in Beispiel 1 in eine Ampulle abgefüllt und in einen Röhrenofen überführt. Die Reaktionszeit beträgt 2,5 Tage (500°C). Man erhält ein tiefblaues, mikrokristallines Pulver mit Absorptionsbanden im Infrarot-Spektrum bei 1091 und 496 cm$^{-1}$. Die Analyse ergibt eine Zusammensetzung von $Co_2H_{10}[P_{12}N_{24}]Cl_2$. Im Pulver-Röntgenbeugungsdiagramm liegt der stärkste Reflex bei 2θ = 26,5 (100 %).

In den Beispielen wurden die folgenden Ausgangsverbindungen eingesetzt.

a) Phosphorkomponenten
Geeignete, käuflich erwerbbare Edukte sind Phosphorpentachlorid $PCl_5$ (Fa. Riedel-de-Haen, Seelze) und Hexachlorcyclotriphosphazen $(PNCl_2)_3$ (Fa. Merck-Schuchardt, Hohenbrunn). Sie eignen sich aufgrund ihrer Flüchtigkeit vor allem zur Synthese in geschlossenen Reaktionsgefäßen. Für die Synthese in offenen Reaktionsgefäßen sind Phosphor-Stickstoff-Komponenten geringerer Flüchtigkeit notwendig. Geeignet sind Hexamincyclotriphosphazen $(PN(NH_2)_2)_3$, Phosphornitrid-imid $HPN_2$ oder Phosphornitrid $P_3N_5$, welche aus den oben genannten Verbindungen durch Umsetzung mit Ammoniak erhältlich sind.
b) Stickstoff-Komponenten
In offenen Reaktionsgefäßen eignet sich Ammoniak-Gas als Synthesegas, welches durch Überleiten über Kaliumhydroxid und Kondensieren auf Natrium/Kalium von Wasserspuren gereinigt wird. Ammoniumchlorid $NH_4Cl$ wird vor dem Einsatz im Hochvakuum sublimiert. Für die Erzeugung von Ammoniak in geschlossenen Reaktionsgefäßen eignen sich Gemische aus Metallnitrid (Metall = Li, Mg, Zn) und Ammoniumhalogenid (Halogenid = Cl, Br, I), die - räumlich getrennt vom eigentlichen Reaktionsraum - beim Erhitzen Metallhalogenid und Ammoniak bilden.

$$z.B. \; Mg_3N_2 + 6 \, NH_4Cl \rightarrow 3 \, MgCl_2 + 8 \, NH_3$$

c) Die verwendeten Metalle M beziehungsweise M' (Mg, Ca, Sr, Ba, Cr, Mn, Fe, Co, Ni, Cu, Zn, Yb, Pr, Nd, Eu) werden in Form ihrer wasserfreien Halogenide, Amide und Nitride eingesetzt.

Die Herstellung geschah unter folgenden Bedingungen:

Die Art und molare Zusammensetzung der Produkte wird von verschiedenen Faktoren bestimmt. Eine wichtige Rolle spielt dabei die Zusammensetzung der Edukte. Stickstoff und Anion B werden jeweils im Überschuß eingesetzt, das Metall-Phosphor-Verhältnis liegt zwischen 4:12 und 14:12. Die festen Ausgangskomponenten werden homogenisiert und in die Reaktionsgefäße überführt. Als Reaktionsgase dienen wasser- und sauerstofffreies Ammoniak, Stickstoff oder Argon. Die Synthese der Verbindungen gelingt sowohl in geschlossenen als auch in offenen Reaktionsgefäßen.

Für die Herstellung in geschlossenen Gefäßen werden die Edukte in Gefäße aus Quarzglas überführt. Diese Gefäße besitzen eine zylindrische Form (Höhe: 20 cm, Durchmesser: 1,5 cm) mit einem Reaktionsvolumen von 20 cm$^3$. Nach dem Einfüllen der Edukte wird der Reaktionsraum evakuiert und durch Zuschmelzen ($H_2/O_2$-Brenner) gasdicht verschlossen.

Für die Synthese in offenen Gefäßen werden die Edukte in Korundgefäße (Höhe: 1,2 cm, Breite: 2,4 cm, Länge: 9,0 cm) gefüllt und letztere in zylindrische Reaktionsrohre (Durchmesser: 3,0 cm) aus Quarzglas überführt. An den Enden der Reaktionsrohre befinden sich Anschlüsse für verschiedene Reaktionsgase (Ammoniak, Stickstoff, Argon).

Wie oben beschrieben, werden die vorbereiteten Edukte bei Temperaturen von 100 bis 800°C umgesetzt. Um homogene Produkte zu erhalten, sind Reaktionszeiten von 12 bis 300 Stunden notwendig.

Die Charakterisierung der Produkte erfolgt auf verschiedene Arten. Zunächst wurde sowohl naßchemisch (Auflösen der Produkte in verdünnter Schwefelsäure, Nachweis der Metalle komplexometrisch, Phosphor und Stickstoff photometrisch, Halogene argentometrisch) als auch mit Hilfe energiedispersiver Röntgenmikroanalyse (EDX) die Zusammensetzung bestimmt. In allen Fällen ergibt sich ein Phosphor-Stickstoff-Verhältnis von 12:24. Die Anzahl der Anionen Z liegt zwischen 0 und 2, die der Kationen M und M' zwischen 0 und 8. Die synthetisierten Verbindungen wurden auch infrarotspektroskopisch (KBr-Preßling, FT-IR-Spektrometer Typ IFS113v, Bruker, Karlsruhe; gemessen wurde Adsorption als Funktion der Wellenzahl) untersucht. Charakteristisch für die hier beschriebenen Verbindungen ist eine Absorptionsbande im Bereich von 1050 bis 1150 cm$^{-1}$ (asymetrische $PN_4$-Tetraederschwingung, typisch für dreidimensional verknüpfte Tetraeder mit zeolith-ähnlicher Struktur), Neben dieser intensivsten Bande erscheint eine weitere bei 500 bis 600 cm$^{-1}$, die als Gitterschwingung interpretiert wird, Zusätzlich tritt bei den wasserstoffhaltigen Verbindungen noch eine Bande bei 3050 - 3150 cm$^{-1}$ auf (Stickstoff-Wasserstoff-Valenzschwingung).

Mit Hilfe der Beugung von Röntgenstrahlen ($CuK_{\alpha 1}$-Strahlung, automatisches Pulverdiffraktometer, Fa. STOE, Darmstadt) konnte der Struktur-Typ der Verbindungen festgestellt und die Lagen der die Elementarzelle aufbauenden Atome nach der Rietveld-Methode verfeinert werden, So wurden z.B. für die hier beschriebenen Phosphor-Stickstoff-Verbindungen vom Sodalith-Typ typischerweise folgende Werte gefunden:

($\theta$ = Bragg-Winkel, d = Netzebenabstände in Å, I = Intensität des gemessenen Reflexes, $I_o$ = Intensität des stärksten gemessenen Reflexes):

| 2 $\theta$ | d | 100* I/$I_o$ |
|---|---|---|
| 15,1 - 15,3 | 5,86 - 5,78 | 5 - 20 |
| 26,4 - 26,6 | 3,37 - 3,35 | 100 |
| 34,3 - 34,5 | 2,61 - 2,60 | 10 - 20 |
| 37,7 - 38,0 | 2,38 - 2,36 | 15 - 25 |
| 40,8 - 41,2 | 2,21 - 2,18 | 25 - 35 |
| 46,6 - 47,1 | 1,95 - 1,92 | 20 - 50 |

Die thermischen Untersuchungen (Argon-Atmosphäre, Differential-Thermoanalyse STA 429, Fa, Netzsch, Selb) ergaben keine Veränderung der Produkte bis 800°C. Oberhalb dieser Temperatur tritt Zersetzung zu Phosphiden ein, Die farbigen Verbindungen (M beziehungsweise M' = Cr, Mn, Fe, Co, Ni, Cu, Yb, Pr, Nd, Eu)) wurden mit UV-VIS-Spektroskopie (UV-VIS-NIR-Spectrophotometer CARY 2400, Fa. Varian, Darmstadt, gemessen wurde Absorption gegen die Wellenlänge, Molenbruch 0,01 in Bariumsulfat) untersucht. Die für Metall-Kationen in tetraedischer Umgebung zu erwartenden drei Triplettübergänge (V.J. Koester, T.M. Dunn; Inorg. Chem, 14 (1975) 1811) wurden beobachtet.

**Patentansprüche**

1. Anorganische mikroporöse Festkörper mit einer Gerüstruktur aus über ihre Ecken verknüpften $PN_4$-Tetraedern der allgemeinen Zusammensetzung $M_xH_y[P_{12}N_{24}]Z_z$, wobei

   $0 < x \leq 8$,
   $y = 0$ bis 14,
   $z = 0$ bis 2,
   M = ein oder mehrere Metalle aus der Gruppe Mg, Ca, Sr, Ba, Cr, Mn, Fe, Co, Ni, Zn, Cu, Yb, Pr, Eu und Nd,
   Z = Cl und/oder Br ist,

   wobei für die Gesamtzusammensetzung Elektroneutralität gewährleistet ist,
   und die Porengröße der mikroporösen Festkörper zwischen 0,2 und 5 nm beträgt.

2. Anorganische Festkörper gemäß einem oder mehreren der Ansprüche 1 bis 6, dadurch gekennzeichnet, daß die Raumnetzstruktur der $PN_4$-Tetraeder einem Zeolith-Strukturtyp entspricht.

3. Verfahren zur Herstellung eines anorganischen Festkörpers gemäß Ansprüchen 1 und 2, dadurch gekennzeichnet, daß eine P-N-haltige bzw. -bildende Verbindung, die gegebenenfalls Z enthalten kann, in dein das Verhältnis von P zu N von 1 und 1 zu 2 beträgt, mit einer Metallhalogenidverbindung $MZ_n$, wobei n der Wertigkeit dem Metalls M entspricht, umgesetzt wird, wobei im Falle eines P zu N-Verhältnisses von größer als 1 zu 2 zur Erreichung dieses Verhältnisses die Reaktion in Gegenwart von $NH_3$ und/oder $NH_4Z$ durchgeführt wird.

4. Verfahren gemäß Anspruch 3, dadurch gekennzeichnet, daß als P-N-haltige bzw. bildende Substanz P, $PZ_5$, $PNZ_2$, $P_3N_5$ und/oder $HPN_2$ eingesetzt wird.

5. Verfahren gemäß Anspruch 4, dadurch gekennzeichnet, die P-N-haltige Substanz $HPN_2$ und/oder $PNCl_2$ ist.

6. Verfahren gemäß einem oder mehreren der Ansprüche 3 bis 5, dadurch gekennzeichnet, daß die Reaktion unter Ausschluß von Sauerstoff und Wasser durchgeführt wird

**Claims**

1. Inorganic microporous solids having a skeleton structure comprising $PN_4$ tetrahedra linked via their apices, of the general composition $M_xH_y[P_{12}N_{24}] Z_z$, in which

   $0 < x \leq 8$,
   $y$ is 0 to 14,
   $z$ is 0 to 2,
   M denotes one or more metals from the group Mg, Ca, Sr, Ba, Cr, Mn, Fe, Co, Ni, Zn, Cu, Yb, Pr, Eu and Nd and
   Z is Cl and/or Br,

   electroneutrality being ensured for the total composition,
   and the pore size of the microporous solids being between 0.2 and 5 nm.

2. Inorganic solids according to one or more of Claims 1 to 6, characterized in that the three-dimensional network structure of the $PN_4$ tetrahedra corresponds to a zeolite structure type.

3. Process for the preparation of an inorganic solid according to Claims 1 and 2, characterized in that a P-N-containing or -forming compound which can optionally contain Z, in which the ratio of P to N is between 1 and 1 to 2, is reacted with a metal halide compound $MZ_n$, in which n corresponds to the valency of the metal M, in the case of a P to N ratio greater than 1 to 2 the reaction being carried out in the presence of $NH_3$ and/or $NH_4Z$ in order to achieve this ratio.

4. Process according to Claim 3, characterized in that P, $PZ_5$, $PNZ_2$, $P_3N_5$ and/or $HPN_2$ is used as the P-N-containing or -forming substance.

5. Process according to Claim 4, characterized in that the P-N-containing substance is $HPN_2$ and/or $PNCl_2$.

6. Process according to one or more of Claims 3 to 5, characterized in that the reaction is carried out in the absence of oxygen and water.

**Revendications**

1. Matières solides inorganiques microporeuses à structure fondamentale de tétraèdres $PN_4$ reliés entre eux par leurs sommets, de composition générale $M_xH_y[P_{12}N_{24}]Z_z$, dans laquelle

   $0 < x \leq 8$,
   $y = 0$ à $14$,
   $z = 0$ à $2$,
   M représente un ou plusieurs métaux du groupe Mg, Ca, Sr, Ba, Cr, Mn, Fe, Co, Ni, Zn, Cu, Yb, Pr, Eu et Nd,
   Z représente Cl et/ou Br,

   la neutralité électrique étant assurée pour la composition globale,
   et la dimension de pore des matières solides microporeuses allant de 0,2 à 5 nm

2. Matières solides inorganiques selon une ou plusieurs des revendications 1 à 6, caractérisées en ce que la structure réticulaire spatiale des tétraèdres $PN_4$ correspond à une structure de type zéolithique.

3. Procédé pour la préparation d'une matière solide inorganique selon les revendications 1 et 2, caractérisé en ce que l'on fait réagir un composé contenant P-N ou capable de former P-N et qui peut le cas échéant contenir Z, et dans lequel le rapport P/N va de 1 à 1:2, avec un halogénure métallique $MZ_n$, pour lequel n est la valence du métal M, la réaction étant effectuée en présence de $NH_3$ et/ou de $NH_4Z$ dans le cas d'un rapport P/N supérieur à 1:2, dans le but de parvenir à ce rapport.

4. Procédé selon la revendication 3, caractérisé en ce que l'on utilise en tant que substance contenant P-N ou capable de former P-N : P, $PZ_5$, $PNZ_2$, $P_3N_5$ et/ou $HPN_2$.

5. Procédé selon la revendication 4, caractérisé en ce que la substance contenant P-N est $HPN_2$ et/ou $PNCl_2$.

6. Procédé selon une ou plusieurs des revendications 3 à 5, caractérisé en ce que la réaction est effectuée à l'abri de l'oxygène et de l'humidité.